# EUROPEAN PATENT APPLICATION

(11) **EP 4 643 722 A1**
(43) Date of publication of application: **05.11.2025**
(21) Application number: 25171921.7
(22) Date of filing: 23.04.2025
(51) Int. Cl.: A47J 31/40, A47J 31/44, A47J 31/60

(54) **GRANULE FEEDING DEVICE AND BEVERAGE MACHINE**

(30) Priority: 29.04.2024 CN 202410526054
(71) Applicant: Kalerm Technology (Suzhou) Co., Ltd, Suzhou Jiangsu 215134 (CN)
(72) Inventor: WANG, Fuming, Suzhou, Jiangsu, 215134 (CN); Dean, LU, Suzhou, Jiangsu, 215134 (CN)
(74) Representative: Winter, Brandl - Partnerschaft mbB

(57) **Abstract**

The present application provides a granule feeding device and a beverage machine. The granule feeding device includes: a fixing base; a storage box, provided above the fixing base, the storage box having an accommodation cavity for accommodating granules; a driving mechanism, including a motor and a transmission shaft driven to rotate by the motor; the storage box includes a support for supporting the granules, the support is provided with a discharge port communicating with the accommodation cavity, the transmission shaft is connected to the support in a drivable manner, and the support is movably provided relative to the transmission shaft; driven by the transmission shaft, the support is capable of performing intermittent movement relative to the fixing base.

## Description

### TECHNICAL FIELD

The present application relates to the field of beverage machines, particularly to a granule feeding device and a beverage machine.

### BACKGROUND

In existing beverage machines, brewing materials and a certain amount of water need to be infused into a brewing chamber for beverage preparation. Taking an automatic coffee machine as an example, coffee granules can be delivered into the brewing chamber, and after brewing, coffee liquid can be discharged from the brewing chamber. This requires periodic cleaning of the brewing chamber to remove oil and granules left during the brewing process. To clean the brewing chamber, cleaning materials need to be added into the brewing chamber for cleaning, and the cleaning materials can be either liquid agents or solid granules.

When cleaning an automatic coffee machine, if liquid agents are used to clean the brewing chamber, the amount of agents needs to be strictly controlled to avoid agents residue. This requires setting up a complex system to control and detect the amount of agents, and users may also easily cause agents spillage or overflow when adding liquid agents.

Of course, solid granules can also be used for cleaning automatic coffee machines. When the brewing chamber needs to be cleaned, users can manually add an appropriate amount of granules into the brewing chamber. For example, a channel with an external opening can be set up to guide granules into the brewing chamber, and users only need to put granules in through the external opening. However, each cleaning operation requires manual operation by users, which is time-consuming and labor-intensive, causing great inconvenience to users. To improve cleaning convenience, automatic granule feeding can be adopted, but in existing technology, granules are easily stuck during automatic feeding, preventing granules from being smoothly fed to the brewing chamber, resulting in poor user experience.

### SUMMARY

One object of the present application is to provide a reliable granule feeding device.

Another object of the present application is to provide a reliable beverage machine.

To achieve one of the above objects, the present application provides a granule feeding device. The granule feeding device including:
a fixing base;
a storage box, provided above the fixing base, the storage box having an accommodation cavity for accommodating granules;
a driving mechanism, including a motor and a transmission shaft driven to rotate by the motor;
wherein the storage box includes a support member for supporting the granules, the support member is provided with a discharge port communicating with the accommodation cavity, the transmission shaft is connected to the support member in a drivable manner, and the support member is movably provided relative to the transmission shaft; driven by the transmission shaft, the support member is capable of performing intermittent movement relative to the fixing base.

Compared with the prior art, the beneficial effects of the present application are: by driving the support member through the transmission shaft, the movement of the support member can drive the granules in the accommodation cavity, preventing granules from being stuck while moving towards the discharge port, ensuring reliable granule feeding. Moreover, the movement of the support member can also prevent granules from adhering together, ensuring reliable granule feeding and good user experience.

The present application further provides a beverage machine, including a main body, wherein the main body is provided with a target cleaning chamber, and wherein the main body is provided with the above-mentioned granule feeding device, and the granule feeding device is configured to dispense granules to the target cleaning chamber.

### BRIEF DESCRIPTION OF THE DRAWINGS

Fig. 1 is a schematic view of a granule feeding device according to an embodiment of the present application.
Fig. 2 is an exploded perspective view of the granule feeding device in Fig. 1.
Fig. 3 is a sectional view along line A-A of the granule feeding device in Fig. 1, wherein the support member is in an initial state.
Fig. 4 is similar to Fig. 4, wherein the support member is driven by the transmission shaft to move in a first direction.
Fig. 5 is a perspective view of the support member.
Fig. 6 is a perspective view of the support member in Fig. 5 from another view.
Fig. 7 is a sectional view along line B-B of the granule feeding device in Fig. 1.
Fig. 8 is an enlarged schematic view of the stirring rod in Fig. 7.
Fig. 9 is a sectional view along line C-C of the granule feeding device in Fig. 7.
Fig. 10 is a sectional view along line D-D of the granule feeding device in Fig. 9.
Fig. 11 is a sectional view along line E-E of the granule feeding device in Fig. 10.
Fig. 12 is a schematic view of another structure of the granule feeding device in Fig. 1.
Fig. 13 is a schematic view of a portion of the structure of the granule feeding device in Fig. 12.
Fig. 14 is a schematic view of the fixing base of the granule feeding device in Fig. 12.
Fig. 15 is a sectional view along line F-F of the granule feeding device in Fig. 12.
Fig. 16 is similar to the sectional view in Fig. 11, showing the granule transfer process where the transfer cavity is in a waiting position.
Fig. 17 is similar to the sectional view in Fig. 11, showing the granule transfer process where the transfer cavity is in a receiving position.
Fig. 18 is similar to the sectional view in Fig. 11, showing the granule transfer process where the transfer cavity is in an output position.
Fig. 19 is similar to the sectional view in Fig. 11, showing the granule transfer process where the transfer cavity is in a detection position.
Fig. 20 is a schematic view of a beverage machine according to an embodiment of the present application.

The repeated use of reference numerals in the present specification and the accompanying drawings is intended to denote the same or similar features or elements of the present application.

### DETAILED DESCRIPTION

The following detailed description of the present application will be made with reference to the specific embodiments shown in the drawings. However, these embodiments do not limit the present application, and any structural, methodological, or functional variations made by those skilled in the art based on these embodiments are included within the scope of protection of the present application.

It should be understood that terms indicating relative spatial positions such as "upper", "above", "lower", "below" used in this document are for the purpose of convenient description to describe the relationship between one unit or feature relative to another unit or feature as shown in the drawings. The terms indicating relative spatial positions may be intended to include different orientations of the device in use or operation besides the orientation shown in the figures.

The granule feeding device in the specific embodiment of the present application is explained taking a granule feeding device 100 for a coffee machine as an example. A coffee machine generally includes a brewing unit, where beverage granules and water are added into the brewing unit for beverage preparation. The coffee machine may also include a milk frother for preparing hot milk or milk foam to produce beverages of different flavors. Both the brewing unit and the milk frother need to be cleaned periodically to ensure safer and more hygienic use of the coffee machine. Granules for assisting cleaning can be added to the brewing unit or milk frother, or can be mixed with water through a cleaning channel and then entered into the brewing unit or milk frother. The brewing unit and milk frother form the target cleaning chamber of the coffee machine, and of course there may be other cavities that need cleaning, all of which can be considered as target cleaning chambers.

The granule feeding device 100 can be connected to the beverage machine through connecting devices or supporting structures, especially to automatic or semi-automatic beverage machines such as coffee machines or tea machines. In the shown embodiment, the granule feeding device 100 can be permanently integrated into the beverage machine; of course, it can also be removably installed on the beverage machine through screws or brackets of the granule feeding device itself.

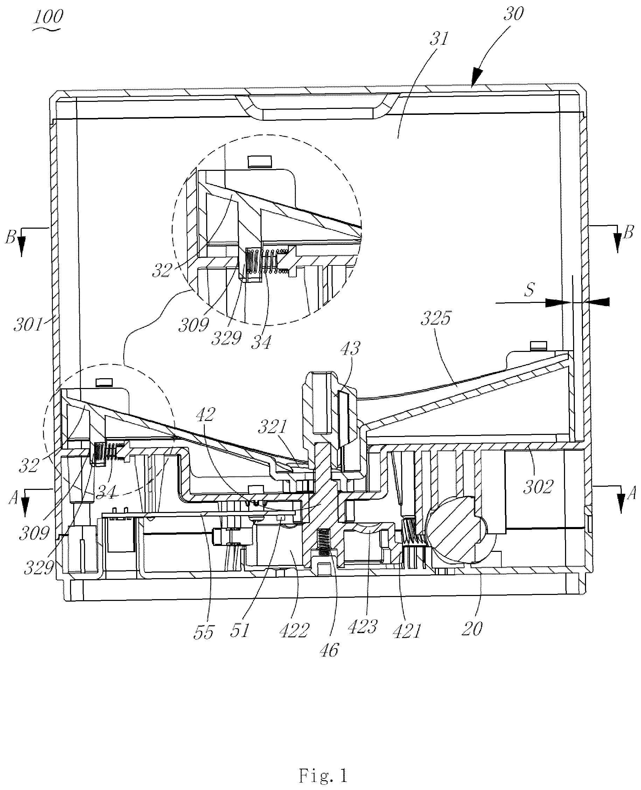

Referring to Figs. 1 to 5, in one embodiment, the granule feeding device 100 includes a fixing base 20, a storage box 30, and a driving mechanism. The storage box 30 is provided above the fixing base 20. The storage box 30 has an accommodation cavity 31 for accommodating granules, and the fixing base 20 is configured for supporting the storage box 30 and installing the driving mechanism. The driving mechanism includes a motor 41 and a transmission shaft 42 driven to rotate by the motor 41, with the motor 41 provided on the fixing base 20. The fixing base 20 can be a separate structure or can be the frame structure of the beverage machine itself. The storage box 30 can be any container capable of accommodating granules.

The storage box 30 includes a support member 32 for supporting the granules, the support member 32 is provided with a discharge port 321 communicating with the accommodation cavity 31, the transmission shaft 42 is connected to the support member 32 in a drivable manner, and the support member 32 is movably provided relative to the transmission shaft 42. Driven by the transmission shaft 42, the support member 32 is capable of moving relative to the fixing base 20.

The movement of the support member 32 relative to the fixing base 20 can drive the granules in the accommodation cavity 31, preventing granules from being stuck while moving towards the discharge port 321, ensuring reliable granule feeding. Moreover, the movement of the support member 32 can also prevent granules from adhering to each other, ensuring reliable granule feeding and good user experience.

In the present embodiment, the support member 32 is movably provided relative to the transmission shaft 42, which means that relative movement can occur between the support member 32 and the transmission shaft 42, i.e., the support member 32 and the transmission shaft 42 are not fixed relative to each other. The support member 32 and the transmission shaft 42 are capable of relative movement, which can further enhance the anti-jamming effect for granules. The support member 32 can be a plate-like structure, or a structure with surrounding barriers around the edges of the plate.

The transmission connection between the transmission shaft 42 and the support member 32 can be implemented in various ways. The movement of the support member 32 relative to the fixing base 20 is intermittent. Within a unit time period, the number of movements of the support member 32 relative to the fixing base 20 is greater than or equal to the number of rotations of the transmission shaft 42. For every full rotation of the transmission shaft 42, the support member 32 moves at least once. Through intermittent movement, combining motion and stillness, the support member 32 can more easily and effectively drive the granules to move.

For example, for one full rotation of the transmission shaft 42, the support member 32 performs three intermittently movements. It can be understood that during one complete rotation of the transmission shaft 42, it sequentially drives the support member 32 to perform a first movement, a second movement, and a third movement. Between the first movement and the second movement, as well as between the second movement and the third movement, there may be equal or varying preset time intervals.

Furthermore, a reset element 34 is connected between the support member 32 and the bottom plate 302. The support member 32 performs intermittent movement along a first direction driven by the transmission shaft 42, and the reset element 34 applies a reset force to the support member 32 along a direction opposite to the first direction.

By providing the reset element 34, the reset of the support member 32 after unidirectional movement along the first direction is achieved, enabling the support member 32 to form reciprocating movement. Through this arrangement, structurally only the transmission shaft 42 needs to be set up to unidirectionally drive the support member 32, and the support member 32 can automatically perform reset movement under the reset force of the reset element 34, making the structure simple. Additionally, the reset movement of the support member 32 driven by the reset element 34 can generate greater vibration potential energy, improving the anti-jamming and anti-adhesion effects for granules.

In some embodiments, the support member 32 is capable of performing at least one of the following movements relative to the fixing base 20: movement along the radial direction of the transmission shaft 42; movement along the axial direction of the transmission shaft 42; rotation around the transmission shaft 42.

Taking the axial direction of the transmission shaft 42 as the vertical direction for example, the movement of the support member 32 along the radial direction of the transmission shaft 42 can be horizontal movement, the movement along the axial direction can be vertical movement, and the rotation around the transmission shaft 42 can be the rotation of the support member 32.

For instance, when the outer contour of the support member 32 is circular, the movement mode of the support member 32 relative to the fixing base 20 can be rotation around the transmission shaft 42.

Of course, the movement of the support member 32 can also be a combination of any two of the above movements. For example, the support member 32 can have both vertical and horizontal movements; or the support member 32 can have both vertical or horizontal movement and rotation.

The support member 32 is movably provided relative to the transmission shaft 42, and cannot always rotate synchronously with the transmission shaft 42, which is more conducive to the support member 32 driving granule movement, further enhancing the anti-jamming effect for granules.

In the present embodiment, the storage box 30 further includes a box wall 301, the support member 32 is disposed within the surrounding space of the box wall 301, and the accommodation cavity 31 is defined by the box wall 301 and the support member 32; the support member 32 is movably provided relative to the box wall 301, and driven by the transmission shaft 42, the support member 32 moves relative to the box wall 301 along the radial direction of the transmission shaft 42. The movement of the support member 32 inside the box wall 301 will not affect user operation.

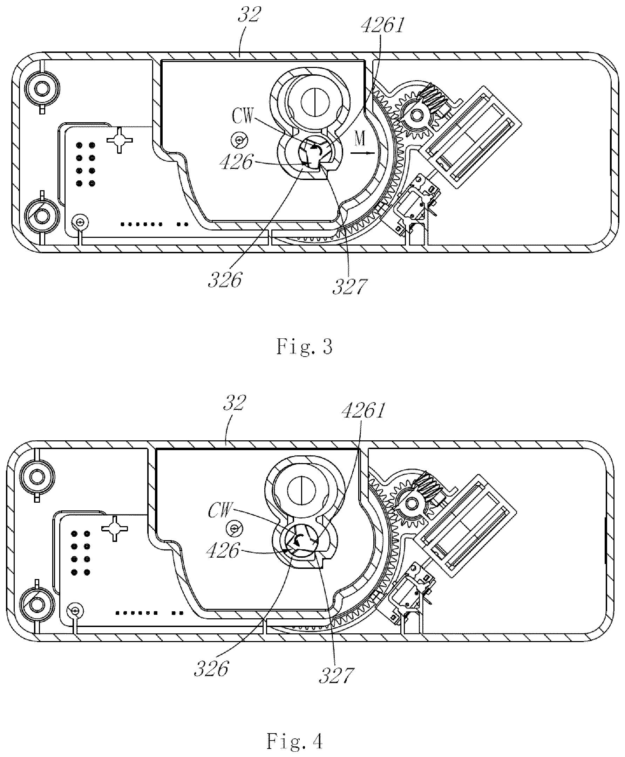

A preset gap S is provided between the support member 32 and the box wall 301 along the first direction, and the preset gap S allows the support member 32 to move linearly relative to the box wall 301 along the first direction. It can be understood that the preset gap S can provide motion space for the movement of the support member 32 relative to the box wall 301. As shown in Fig. 3, the arrow direction M can exemplify the first direction in this embodiment. It can be understood that the box wall 301 is the side wall of the storage box 30.

In one embodiment, the storage box 30 further includes a bottom plate 302, which is fixedly disposed at the bottom of the box wall 301. The transmission shaft 42 passes through the bottom plate 302 and is connected with the support member 32 in a drivable manner, and the support member 32 is movably supported above the bottom plate 302 along the first direction.

Supporting the support member 32 movably above the bottom plate 302 facilitates the manufacturing and assembly of the storage box 30. The transmission shaft 42 only drives the support member 32 to move without driving the bottom plate 302, which can reduce the transmission load of the motor 41.

The bottom plate 302 and box wall 301 can be integrally formed, meaning the bottom plate 302 and box wall 301 are configured as the main body of the storage box 30, and the support member 32 is then installed inside the main body as a separate component independent of the main body, facilitating installation of the support member 32 and easy replacement when damaged.

The support member 32 is slidably connected with the bottom plate 302 along the first direction, meaning the support member 32 can slide on the bottom plate 302 along the first direction or an opposite direction of the first direction. The bottom plate 302 can shield the preset gap, preventing granule powder leakage, and the structure is simple, making the support of the support member 32 more reliable.

To facilitate installation of the reset element 34, a first end 341 of the reset element 34 abuts against the bottom plate 302, a second end 342 of the reset element 34 abuts against the support member 32, and the reset element 34 provides a reset force to the support member 32 in the direction opposite to the first direction, with the first end 341 and second end 342 disposed opposite to each other.

For example, the support member 32 can move to a first maximum position along the first direction driven by the transmission shaft 42, and under the reset force of the reset element 34, the support member 32 can perform reset movement in the direction opposite to the first direction, moving from the first maximum position to a second maximum position; where the first maximum position and second maximum position are two maximum positions of the support member 32 along the first direction.

The reset element 34 is provided so that the transmission shaft 42 only needs to drive the support member 32 to move in one direction, while movement in the opposite direction is driven by the reset element 34. The reset movement of the support member 32 driven by the reset element 34 can generate greater vibration potential energy, improving the anti-jamming and anti-adhesion effects for granules.

The reset element 34 is configured as a compression spring, but it can also be other elements that can generate reset force, such as repelling magnets.

Additionally, the support member 32 is provided with a first limiting portion 329 on the side facing the bottom plate 302, the bottom plate 302 is provided with a second limiting portion 309 cooperating with the first limiting portion 329, and the second end 342 of the reset element 34 abuts against the first limiting portion 329; the first limiting portion 329 and the second limiting portion 309 can abut against each other along the first direction,such that the movement stroke of the support member 32 relative to the bottom plate 302 in the direction opposite to the first direction is limited.

Through the abutment of the two limiting portions to define the movement stroke of the support member 32, the movement of the support member 32 can be more reliable, preventing the support member 32 from hitting the box wall 301.

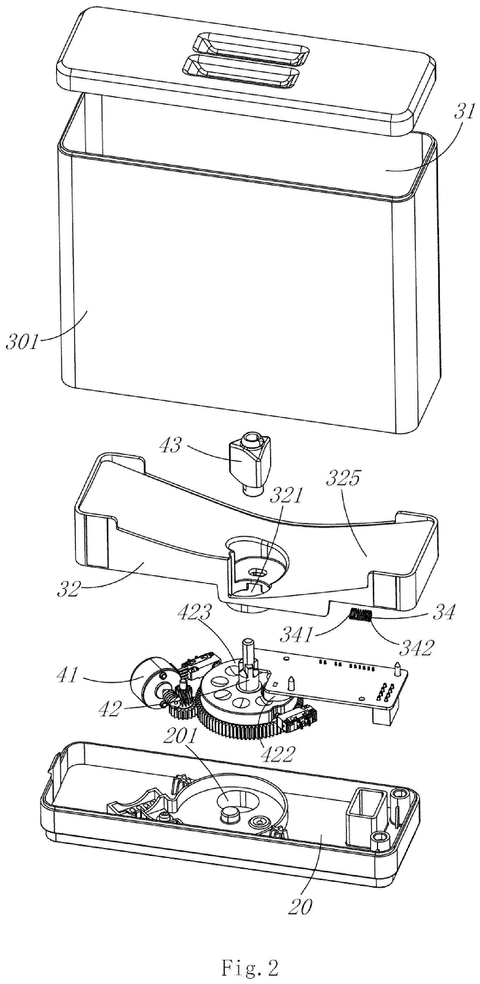

Referring to Figs. 1 and 2, one side of the first limiting portion 329 abuts against the reset element 34, enabling the reset element 34 to drive the support member 32 to perform reset movement through the first limiting portion 329, while the other side of the first limiting portion 329 can abut against the second limiting portion 309 to limit the reset movement stroke of the support member 32. The first limiting portion 329 has high functional integration, simplifying the structure while achieving its functions in a compact manner.

Furthermore, to reduce collision noise between the first limiting portion 329 and the second limiting portion 309, an elastic gasket can be provided at the contact point between the first limit portion 329 and the second limit portion 309, which can buffer the movement of the first limiting portion 329 towards the second limiting portion 309, reducing noise while also increasing the service life of the support member 32.

Continuing to refer to Figs. 3 to 5, the support member 32 is provided with a blocking portion 327, and the transmission shaft 42 is provided with a driving portion 426 connected with the blocking portion 327 in a drivable manner. Driven by the transmission shaft 42, the driving portion 426 abuts against and drives the blocking portion 327 to drive the support member 32 to move relative to the fixing base 20.

The driving portion 426 can abut against the blocking portion 327 to achieve movement of the support member 32 relative to the fixing base 20. The arrow CW direction in Fig. 4 can exemplify the counterclockwise direction in this embodiment. The arrangement of the driving portion 426 can simplify the transmission connection between the transmission shaft 42 and the support member 32, making the feeding device structure compact and cost-effective.

The blocking portion 327 and driving portion 426 interfere along the first direction; driven by the transmission shaft 42, the driving portion 426 moves towards the blocking portion 327 in the counterclockwise direction. After the driving portion 426 contacts the blocking portion 327, the driving portion 426 can drive the blocking portion 327 to move, causing the support member 32 to move along the first direction. After the driving portion 426 moves past the blocking portion 327 in the counterclockwise direction, i.e., after the driving portion 426 disengages from the blocking portion 327, the support member 32 can perform reset movement in the direction opposite to the first direction under the action of the reset element 34.

When the transmission shaft 42 rotates in the arrow CW direction, the driving portion 426 abuts against the blocking portion 327, driving the support member 32 to move along the first direction until, as shown in Fig. 4, the driving portion 426 moves past the blocking portion 327 in the arrow direction, and the support member 32 will reset in the direction opposite to the first direction under the action of the reset element 34.

The transmission shaft 42 is provided with at least one driving tooth 4261, which forms the driving portion 426. One driving tooth 4261 can be provided along the circumferential direction of the transmission shaft 42, or multiple driving teeth 4261 can be spaced apart. When multiple driving teeth 4261 are provided on the transmission shaft 42, they are spaced apart along the circumferential direction of the transmission shaft 42.

The driving teeth 4261 intermittently abut against and drive the blocking portion 327, causing the transmission shaft 42 to intermittently drive the support member 32 to move relative to the fixing base 20.

In this embodiment, three driving teeth 4261 are spaced apart along the circumferential direction of the transmission shaft 42. Each full rotation of the transmission shaft 421 can push the support member 32 three times, thus increasing the frequency of reciprocating vibration of the support member 32 and further preventing granule jamming or adhesion.

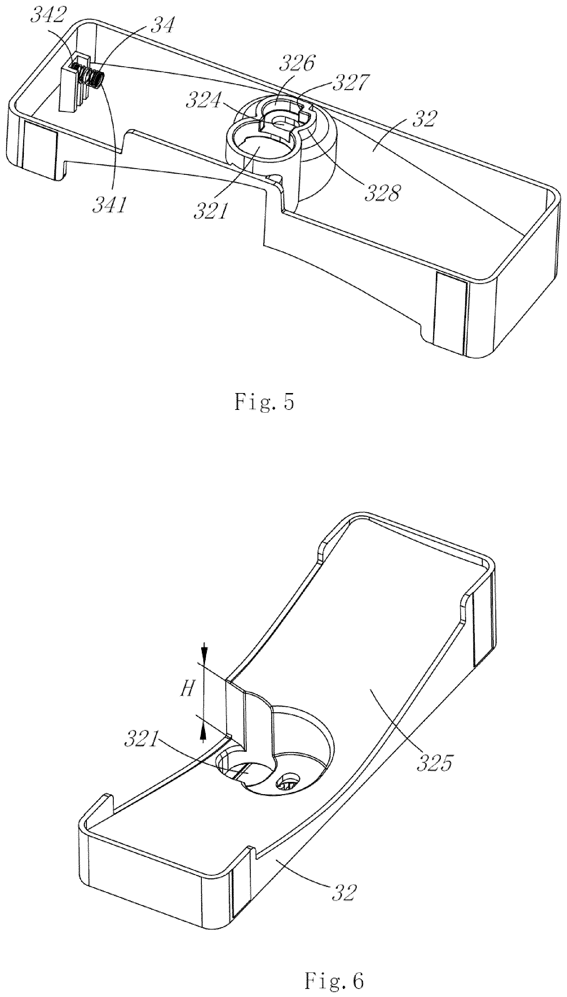

Additionally, referring to Fig. 5, the support member 32 is provided with a clearance hole 324 for the transmission shaft 42 to pass through, and a rib 328 is provided on the side of the support member 32 facing away from a supporting surface 325, i.e., on the side facing the fixing base 20. The rib 328 at least partially surrounds the clearance hole 324 to form a mating groove 326, and there is a gap between the transmission shaft 42 and the mating groove 326 along the radial direction of the transmission shaft 42, with the blocking portion 327 formed within the mating groove 326.

By constructing the mating groove 326 through providing the rib 328 on the back of the support member 32, the thickness, material, and protruding height of the rib can be optimally designed to make the driving connection between the transmission shaft 42 and the blocking portion 327 more reliable, thereby improving the service life of the support member 32.

In alternative embodiments, the transmission shaft 42 is provided with a cam that forms the driving portion 426, and along the circumferential direction of the transmission shaft 42, the cam can abut against and drive the blocking portion 327. The cam can take various forms, such as an eccentric wheel. The cam can also drive the support member 32 to move through the blocking portion 327.

In one embodiment, the transmission shaft 42 is provided with a transfer disc 423 at an end facing the fixing base 20, with both the motor 41 and transfer disc 423 mounted on the fixing base 20. The fixing base 20 is provided with a delivery outlet 201; the transfer disc 423 is provided with at least one transfer cavity 422, and as the transmission shaft 42 rotates, the transfer disc 423 drives the transfer cavity 422 to sequentially communicate with the discharge port 321 and the delivery outlet 201.

Through the rotation of the transfer disc 423, when the transfer cavity 422 communicates with the discharge port 321, the transfer disc 423 automatically receives granules; when the transfer cavity 422 communicates with the delivery outlet 201, the transfer disc 423 automatically outputs granules. The rotation of the transfer disc 423 can achieve automated quantitative dispensing of granules, facilitating granule measurement to control cleaning effectiveness and achieve optimal cleaning results, enabling the beverage machine to execute the cleaning process fully automatically, thus making it more convenient for users.

The driving mechanism is disposed below the bottom plate 302, and the discharge port 321 is offset relative to the rotation axis of the transfer disc 423, facilitating granule reception by the transfer disc 423.

In this embodiment, there is one transfer cavity 422, while in other optional embodiments, there can be two, three, or more transfer cavities 422, with multiple transfer cavities 422 spaced apart along the circumferential direction of the transfer disc 423. In each full rotation of the transfer disc 423, each transfer cavity 422 can sequentially communicate with the discharge port 321 and the delivery outlet 201, thus increasing the number of granules delivered per unit time without changing the rotation speed of the transfer disc 423.

In one embodiment, three transfer cavities 422 are provided, with each transfer cavity 422 only able to accommodate one granule. Driven by the transfer disc 42, each of the three transfer cavities 422 is configured to first communicate with the discharge port 321 to receive granules and then with the delivery outlet 201 to output granules. Each full rotation of the transfer disc 42 can deliver three granules.

Optionally, the axis of the motor 41 is perpendicular to the rotation axis of the transfer disc 423. The outer peripheral surface of the transfer disc 423 is provided with transmission teeth 421, and the motor 41 drives the transfer disc 423 to rotate via the transmission teeth 421.

The horizontal placement of the motor 41 relative to the transfer disc 423 can reduce the height of the feeding device along the axial direction of the transfer disc 423, better utilizing space on the fixing base 20 to make the feeding device more compact.

A multi-stage gear train can be provided between the motor 41 and the transfer disc 423 to transmit power from the motor 41 to the transfer disc 423. Specifically, the output shaft of the motor 41 is connected to a worm 411. A worm wheel 412 and a gear 413 are connected between the transfer disc 423 and the worm 411. The worm 411 meshes with the worm wheel 412, the worm wheel 412 is coaxially fixed with the gear 413, and the gear 413 meshes with the transmission teeth 421 on the transfer disc 423, thus achieving drive from the motor 41 to the transfer disc 423 through two-stage transmission.

The worm gear transmission has a large transmission ratio, and the worm gear structure can change the direction of transmission . By directly setting transmission teeth 421 on the outer peripheral surface of the transfer disc 423, speed reduction transmission from the motor 41 to the transfer disc 423 is achieved, making the entire transmission mechanism more compact while maintaining reliable transmission.

Other transmission methods can also be used between the motor 41 and the transfer disc 423, such as bevel gear transmission, chain transmission, or belt transmission, or a combination thereof.

In some embodiments, the worm wheel 412 and gear 413 are integrally formed, which simplifies the structure while improving transmission strength and stability.

The transmission shaft 42 is integrally formed with the transfer disc 423, so when the motor 41 drives the transfer disc 423, it simultaneously drives the transmission shaft 42 to rotate, making the structure simple and more cost-effective.

It can be understood that while the transfer disc 423 drives the transfer cavity 422 to rotate for granule transport and delivery, the transmission shaft 42 rotates synchronously with the transfer disc 423, driving the support member 32 to move, which in turn drives the movement of granules supported on the support member 32, achieving anti-jamming and anti-adhesion of granules.

The support member 32 can be indirectly driven by the transfer disc 423 that performs granule transport, eliminating the need for separate drives for the support member 32, making the structural design ingenious and streamlined.

The bottom plate 302 is provided with a storage channel 322 communicating with the discharge port 321, and the storage channel 322 extends towards the transfer disc 423. One end of the storage channel 322 communicates with the accommodation cavity 31, and the other end of the storage channel 322 is configured for intermittent communication with the transfer cavity 422.

In one embodiment, the storage channel 322 has a storage space, and along the direction in which granules enter the storage channel 322, the storage space can be configured to accommodate at least one granule.

In this embodiment, the storage space is dimensioned to accommodate only a single granule, allowing one granule to be pre-stored in the storage space while the transfer disc 423 is transporting another granule, ensuring reliable delivery for the next cycle.

In one embodiment, the transfer cavity 422 can also be designed to accommodate only a single granule to ensure quantitative output of granules.

Of course, the storage space can also be designed to accommodate multiple granules, with multiple granules sequentially stacked along the direction of entry into the storage channel 322, preventing multiple granules from jamming in the storage space and facilitating smooth and accurate transfer of granules from the storage channel 322 to the transfer cavity 422.

The multiple granules are sequentially stacked within the storage space along an extension direction of the storage space. In this embodiment, it can be understood that multiple granules are stacked vertically in the storage space. Of course, the storage space can also extend at an angle to the height direction of the beverage machine, with the stacking direction of multiple granules in the storage space aligning with the extension direction of the storage space.

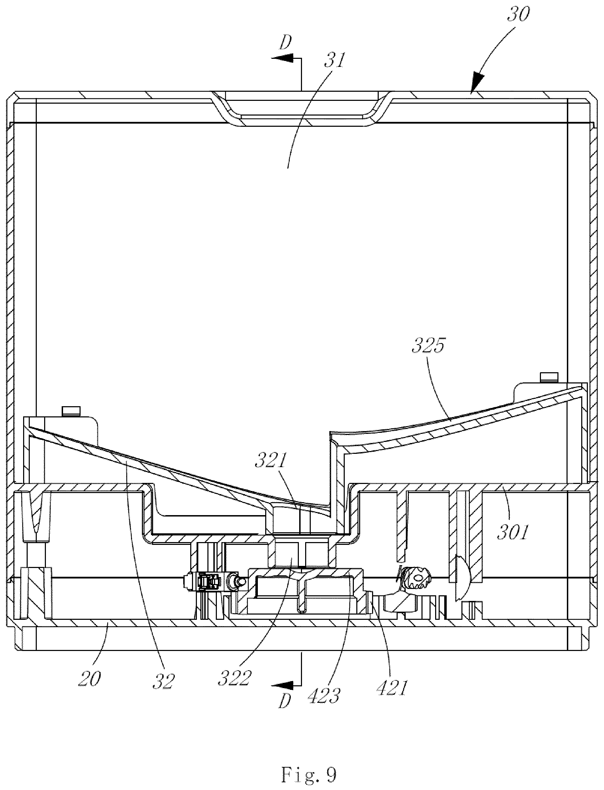

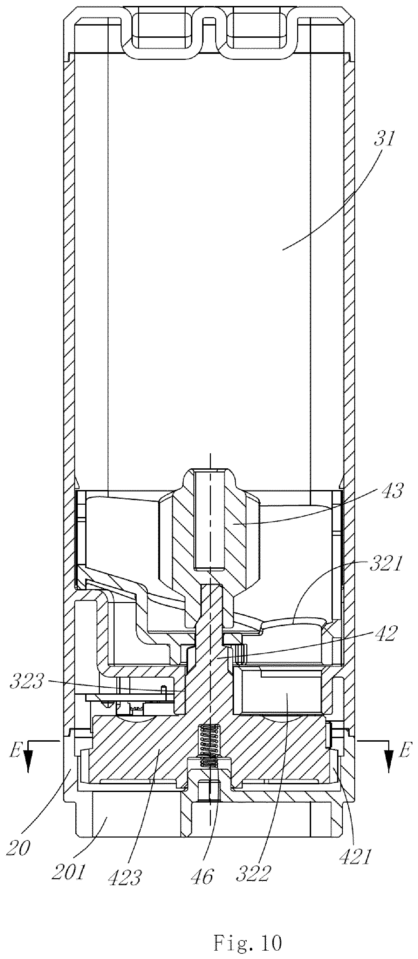

Furthermore, referring to Figs. 6 to 10, a stirring rod 43 is provided in the accommodation cavity 31, the stirring rod 43 is disposed above the support member 32, preferably near the discharge port 321. The transmission shaft 42 passes through the support member 32 and is connected with the stirring rod 43 in a drivable manner.

The stirring rod 43 is connected to the transmission shaft 42 and extends into the accommodation cavity 31, with the transmission shaft 42 capable of driving the stirring rod 43 to rotate synchronously. Thus, while the transmission shaft 42 drives the support member 32 to move, it can also drive the stirring rod 43 to stir the granules stored in the accommodation cavity 31, preventing multiple granules from being stuck in dead corners or from sticking together and failing to enter the discharge port 321.

The transmission shaft 42 passes through both the bottom plate 302 and support member 32 and is connected with the stirring rod 43 in a drivable manner. The stirring rod 43 is directly rotated by the transmission shaft 42 without requiring additional power drive mechanisms, thereby improving the functional integration of the transmission shaft 42 without increasing the cost of the delivery device.

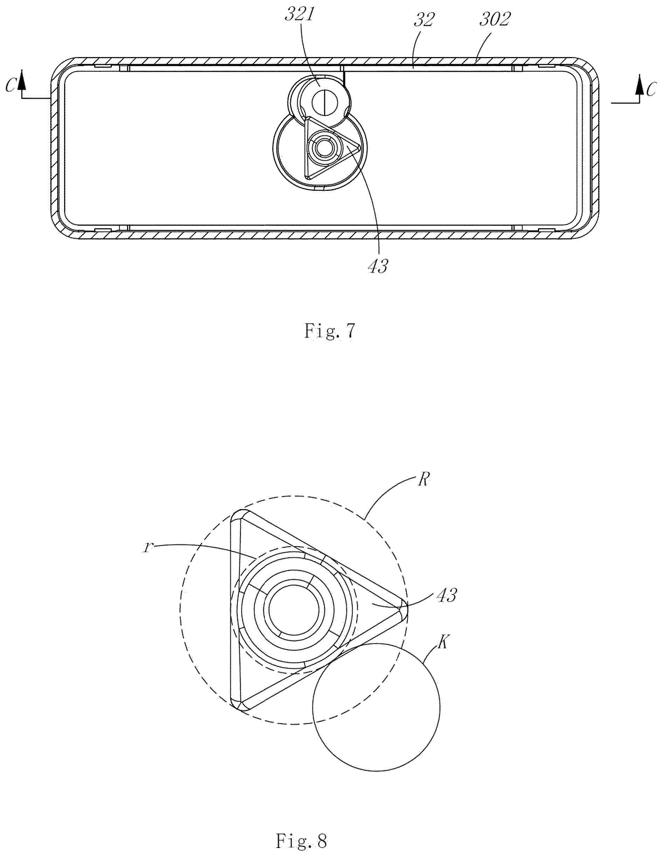

The stirring rod 43 can be any shape that facilitates stirring granules. Referring to Figs. 7 and 8, in this embodiment, the granules are spherical, the stirring rod 43 is coaxially arranged with the transfer disc 423, and the outer contour of the stirring rod's cross-section is configured as a polygon, with the difference between the radii of the circumscribed circle and inscribed circle of the polygon being less than the radius of the granules.

By setting the dimensions of the stirring rod 43, smooth stirring of granules can be achieved while reducing the probability of the stirring rod 43 being jammed by granules during rotation.

In this embodiment, the outer contour of the stirring rod's cross-section is configured as a triangle, with the difference between the radii of the circumscribed circle R and inscribed circle r of the triangle being less than the radius of granule K. The triangular cross-section of the stirring rod 43 makes it easier to stir granules and better prevents the stirring rod 43 from being jammed by granules.

The transmission shaft 42 is fixedly connected with the transfer disc 423, and the bottom plate 302 is provided with a positioning hole 323, the end of the transmission shaft 42 away from the transfer cavity 422 passes through the positioning hole 323 into the accommodation cavity 31 and is connected to the stirring rod 43.

The transfer disc 423 can be positioned relative to the bottom plate 302 through the transmission shaft 42, which also facilitates the connection between the transmission shaft 42 and the stirring rod 43 in the accommodation cavity 31, ensuring more reliable granule feeding. The transmission shaft 42 not only positions the transfer disc 423 but also provides a driving connection to the stirring rod 43, making the feeding device structure more compact while achieving its functions.

Of course, the transmission shaft 42 can be integrally formed with the transfer disc 423 or separately mounted on it. Preferably, in this embodiment, the transmission shaft 42 is integrally formed with the transfer disc 423, thus reducing the assembly complexity of the delivery device while improving transmission reliability.

Referring to Figs. 6 to 10, an elastic member 46 is provided between the transfer disc 423 and the fixing base 20. The elastic member is configured as a compression spring, and both ends of the compression spring abut against the transfer disc 423 and the fixing base 20 respectively. The elastic member 46 provides elastic force to the transfer disc 423 along the rotation axis direction away from the fixing base 20, thereby increasing the rotational damping of the transfer disc 423 and reducing its rotation noise, thus achieving noise reduction and improving user experience.

To ensure reliable granule feeding to the discharge port 321, the support member 32 can include a supporting surface 325 for supporting granules, configured as a spiral surface with the center line of the discharge port 321 as the spiral center line.

Along the height direction of the beverage machine, the portion of the supporting surface 325 farther from the discharge port 321 is higher than the portion closer to the discharge port 321, thus enabling the spiral surface to guide granule movement. Under gravity, guided by the spiral surface, granules can roll or slide to the discharge port 321 in an orderly sequence. Compared to a flat supporting surface 325, the spiral surface construction can reliably transport granules even when few remain.

Optionally, along the radial direction of the spiral center line, the supporting surface 325 is inclined downward toward the center of the discharge port 321.

The support member 32 and bottom plate 302 are separately provided, allowing independent manufacture of the support member 32, making the shape and dimensions of the support member 32 easier to ensure while simplifying the structure and manufacture of the storage box 30 itself, thereby reducing costs.

Additionally, the inclination of the supporting surface 325 can form an inclined spiral surface, more reliably guiding granules toward the discharge port 321.

In this embodiment, the storage box 30 is configured as a cuboid, with the center of the transfer disc 423 concentrically aligned with the center of the cuboid. Along the width direction of the cuboid, the discharge port 321 is offset from the center of the transfer disc 423. Referring to Fig. 6, along the axial direction of the spiral center line, the height difference H between the highest and lowest points of the spiral surface is less than or equal to one pitch. This dimensional setup of the spiral surface can more rationally utilize space within the storage box 30, ensuring reliable granule output regardless of the quantity stored.

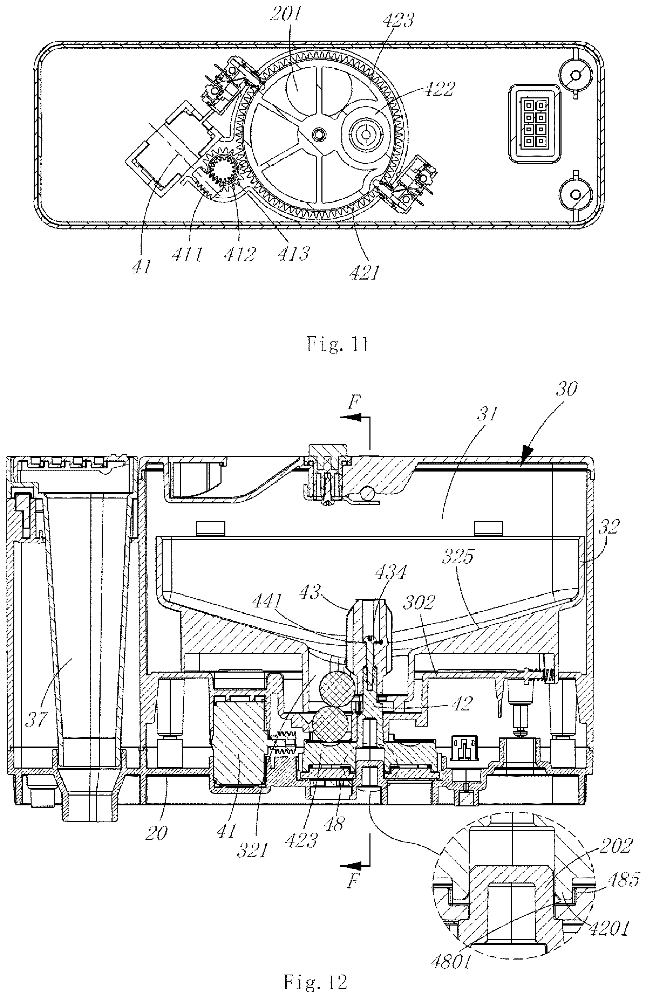

Referring to Figs. 11 to 15, in one embodiment, the transmission shaft 42 is fixedly connected with a transfer disc 423 at an end facing the fixing base 20, and the motor 41 drives the transmission shaft 42 to rotate via the transfer disc 423. The transmission shaft 42 and the bottom plate 302 are configured with a clearance fit, and the transfer disc 423 is provided with at least one transfer cavity 422 for accommodating granules. The end surface of the transfer disc 423 facing the base plate 302 is provided with a powder guiding portion 427 protruding towards the bottom plate 302, and the powder guiding portion 427 is attached to and disposed around the outer periphery of the transmission shaft 42.

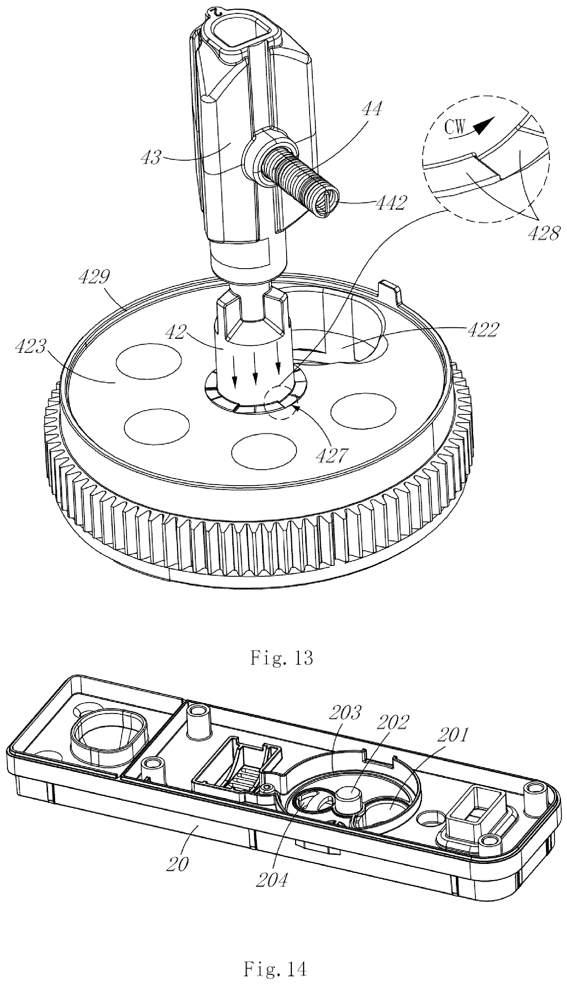

By providing the powder guiding portion 427 at the position adjacent to the transmission shaft 42 on the transfer disc 423, granule powder falling through the gap between the transmission shaft 42 and the bottom plate 302 (as indicated by the arrow in Fig. 13) can be guided out to the upper surface of the transfer disc 423 through the powder guiding portion 427, preventing excessive granule powder from being stored in the rotation gap between the transmission shaft 42 and the bottom plate 302, which could lead to blockage and jamming of the transfer disc 423.

Optionally, the powder guiding portion 427 includes one or more guiding inclined surfaces 428, and the protruding height of the guiding inclined surfaces 428 increases along the rotation direction (as indicated by the direction of the arrow CW in Fig. 13) of the transmission shaft 42. When multiple guiding inclined surfaces 428 are provided, they are continuously arranged along the outer periphery of the transmission shaft 42. The high portion of the guiding inclined surface 428 can intercept or scrape off granule powder falling from the above-mentioned gap, and the intercepted or scraped granule powder will fall onto the low portion of the adjacent guiding inclined surface 428 and be guided out to the upper surface of the transfer disc 423 as the transfer disc 423 rotates, to realise the removal of granule powder from the rotation gap between the transmission shaft 42 and the bottom plate 302.

Optionally, an edge of the transfer disc 423 is provided with an annular powder blocking rib 429, the powder blocking rib 429 protrudes towards the bottom plate 302, and the powder blocking rib 429 is disposed at the periphery of the transfer cavity 422. The powder blocking rib 429 can block granule powder that falls onto the upper surface of the transfer disc 423, preventing it from entering the driving connection portion of the transfer disc 423 and causing wear, thereby improving the service life of the transfer disc 423.

Additionally, the fixing base 20 is provided with a powder leakage port 204, and during rotation of the transfer disc 423 driven by the transmission shaft 42, the transfer cavity 422 can communicate with the powder leakage port 204. The powder leakage port 204 facilitates cleaning of fallen granule powder. For example, a removable cover can be provided below the powder leakage port 204, and granule powder can be cleaned by removing the cover.

Referring to Figs. 12 and 13, in one embodiment, the stirring rod 43 is connected with a stirring arm 44, the stirring arm 44 extends along a direction at an angle respect to the longitudinal direction of the stirring rod 43. By providing the stirring arm 44 that extends in a different direction from the stirring rod 43, the stirring rod 43 can drive the stirring arm 44 to rotate synchronously, enabling stirring of granules over a larger range, further reducing the chance of granules getting stuck in dead corners or sticking together and failing to enter the discharge port 321.

Optionally, the stirring arm 44 includes a fixed end 441 and a suspended end 442 disposed opposite to each other, with the fixed end 441 fixedly connected to the stirring rod 43 and the suspended end 442 configured as a free end. The stirring arm 44 is configured to rotate with the stirring rod 43, the suspended end 442 is capable of deforming relative to the fixed end 441 when subjected to force. The deformation of the suspended end 442 under force allows the stirring arm 44 to yield when contacting either the support member 32 or stuck granules that are adhered together, enabling smooth rotation of the stirring rod 43 and preventing motor 41 damage by excessive loading of the stirring rod 43.

For example, the stirring arm 44 is configured as an elastic member, such as a tension spring, compression spring, or other spiral spring. During rotation with the stirring rod 43, even if the stirring arm 44 interferes with the support member 32, it can pass over the interfering portion through its own deformation.

To facilitate installation of the stirring arm 44, holes are provided on both the top and side of the stirring rod 43 respectively. The fixed end 441 of the stirring arm 44 passes through the side hole, and a fixing screw 434 can be inserted into the top hole to secure the fixed end 441 to the stirring rod 43. This allows the stirring arm 44 to be installed in a position more advantageous for stirring granules without affecting the granule-stirring function of the stirring rod's outer contour.

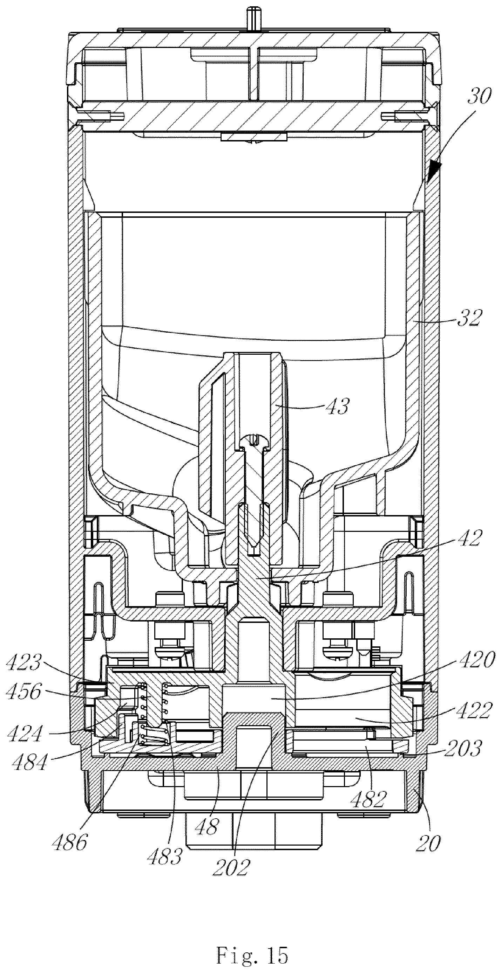

Referring to Figs. 14 and 15, in one embodiment, the feeding device 100 further includes a sealing cover 48 that is circumferentially fixed relative to the transfer disc 423. The sealing cover 48 is disposed between the transfer disc 423 and the fixing base 20. The sealing cover 48 is provided with a through hole 482 communicating with the transfer cavity 422, and the transfer cavity 422 communicates with the delivery outlet 201 through the through hole 482.

The sealing cover 48 prevents steam (such as steam from the target cleaning chamber) downstream of the granule feeding device from ascending through the delivery outlet 201 into the storage container 30.

Optionally, the fixing base 20 is provided with a positioning post 202, the transfer disc 423 is provided with a positioning hole 420 extending along the direction of the rotation axis. The positioning post 202 passes through the sealing cover 48 and extends into the positioning hole 420. An insertion foot 4201 is provided at the edge of the positioning hole 420. The sealing cover 48 also provides a blocking edge 485 disposed at the periphery of the positioning post 202, a slot 4801 is formed between the blocking edge 485 and the positioning post 202, and the insertion foot 4201 is inserted into the slot 4801 to restrict rotation of the sealing cover 48 relative to the transfer disc 423. The plug-in connection between the sealing cover 48 and positioning hole 420 achieves circumferential fixing between the transfer disc 423 and sealing cover 48, enabling the transfer disc 423 and sealing cover 48 to rotate simultaneously.

Optionally, the transfer disc 423 is provided with a recess 424 on the side facing the fixing base 20, and the sealing cover 48 covering the opening of the recess 424. A second elastic member 483 is provided in the recess 424, providing elastic force to the sealing cover 48 along the rotation axis direction away from the transfer disc 423.

Providing the second elastic member 483 not only reduces vibration noise during rotation of the transfer disc 423 and sealing cover 48 but also presses the sealing cover 48 against the fixing base 20, enhancing the sealing effect.

Multiple second elastic members 483 can be provided, such as two, three, or more, spaced apart around the rotation axis. The transfer disc 423 provides protruding posts 456, and the sealing cover 48 provides positioning holes 486. One end of the second elastic member 483 is sleeved over the protruding post 456, while the other end extends into the positioning hole 486, facilitating installation and positioning of the second elastic member 483.

Optionally, the sealing cover 48 provides a skirt edge 484 surrounding the rotation axis on the end facing the transfer disc 423, with the skirt edge 484 extending into the recess 424. This arrangement facilitates installation and positioning between the sealing cover 48 and transfer disc 423, while further preventing steam (such as steam from the target cleaning chamber) from downstream of the granule feeding device from entering the recess 424.

Optionally, the fixing base 20 further provides a powder leakage port 204 spaced apart from the delivery outlet 201, and the fixing base 20 provides an annular rib 203 surrounding the rotation axis. Both the delivery outlet 201 and powder leakage port 204 are located on the inner side of the annular rib 203, with the sealing cover 48 abutting against the annular rib 203.

Providing the annular rib 203 reduces wear between the sealing cover 48 and fixing base 20, extending the service life of the feeding device 100 while further preventing steam (such as steam from the target cleaning chamber) from entering the recess 424.

Additionally, the storage container 30 has a manual adding channel 37 on one side, allowing cleaning granules to be manually added to the target cleaning chamber, providing users with more options.

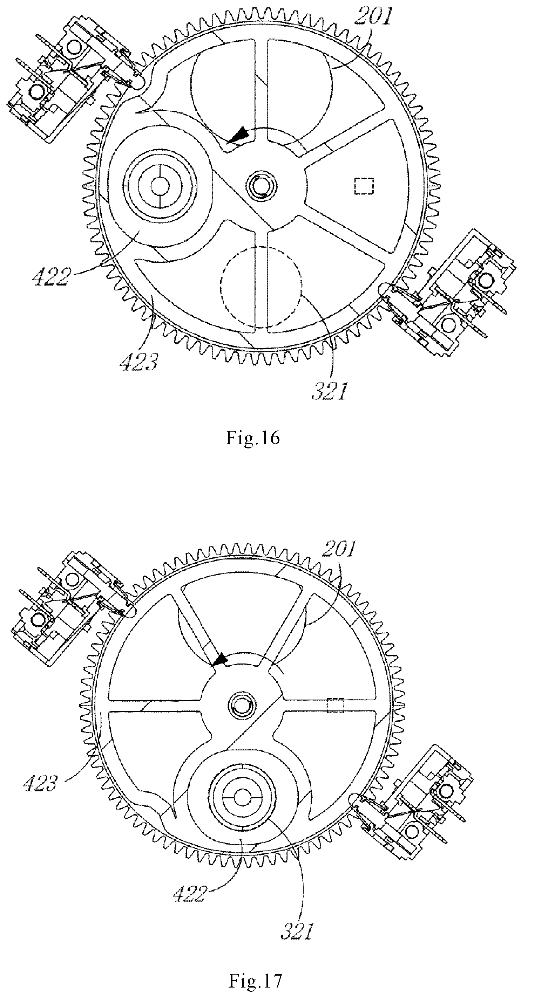

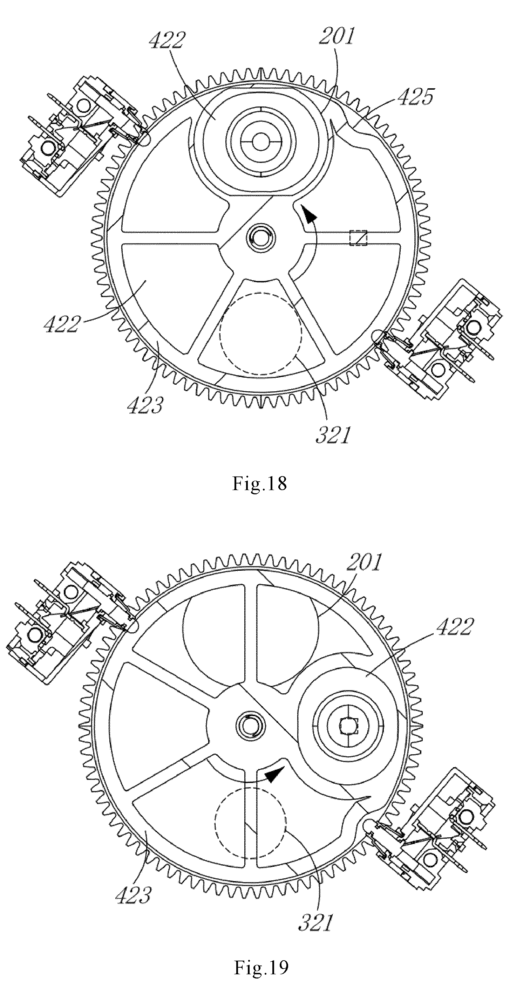

Referring to Figs. 16 to 18, in this embodiment, there is one transfer cavity 422, and each full rotation of the transfer disc 423 delivers one granule. Along the movement direction of the transfer cavity 422, the transfer cavity 422 sequentially has a waiting position, receiving position, and output position. In the waiting position, the transfer cavity 422 is offset from both the discharge port 321 and delivery outlet 201 (Fig. 16). In the receiving position, the transfer cavity 422 communicates with the discharge port 321 for receiving granules (Fig. 17). In the output position, the transfer cavity 422 communicates with the delivery outlet 201 for delivering granules (Fig. 18).

When the transfer disc 423 is in standby state, the transfer cavity 422 is offset from both ports, preventing granules from being contained in the transfer cavity 422 for long periods, which could lead to moisture-induced adhesion and delivery failure.

Furthermore, when the transfer disc 423 drives the transfer cavity 422 to rotate, the transfer disc 423 also drives the stirring rod 43, further ensuring smooth granule transfer from the discharge port 321 to the transfer cavity 422.

In other optional embodiments, multiple transfer cavities 422 can be provided, achieveing multiple granules' transfer in each full rotation. Each transfer cavity 422 sequentially has a waiting position, receiving position, and output position along the movement direction. In standby state, each transfer cavity 422 is offset from both the discharge port 321 and delivery outlet 201.

Optionally, the transfer cavity 422 also has a detection position. As shown in Fig. 19, the receiving position, detection position, and output position are arranged sequentially along the movement direction. Detecting granules when the transfer cavity 422 reaches the detection position improves detection accuracy.

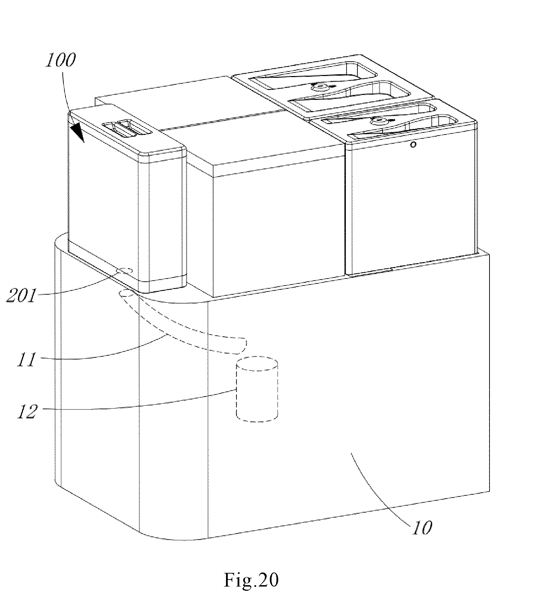

Referring to Fig. 20, the present application also provides a beverage machine comprising a main body 10 with a target cleaning chamber 12. The above-described granule feeding device is provided on top of the main body 10 for convenient granule addition. The main body 10 provides a delivery channel 11 connecting the delivery outlet 201 with the target cleaning chamber 12.

The installation of the granule feeding device on the beverage machine enables automatic metered delivery of granules, thereby allowing the beverage machine to execute cleaning processes fully automatically, achieving optimal cleaning results and providing convenience for users.

It should be understood that although this specification describes various embodiments, each embodiment does not necessarily contain only one independent technical solution. This method of description in the specification is merely for clarity. Those skilled in the art should consider the specification as a whole, and the technical solutions in various embodiments can be appropriately combined to form other embodiments that can be understood by those skilled in the art.

The series of detailed descriptions listed above are merely specific explanations of feasible embodiments of the present application. They are not intended to limit the scope of protection of the present application. Any equivalent implementations or modifications that do not depart from the technical spirit of the present application should be included within the scope of protection of the present application.

## Claims

1. A granule feeding device (100), comprising:
a fixing base (20);
a storage box (30), disposed above the fixing base (20), the storage box (30) having an accommodation cavity (31) for accommodating granules;
a driving mechanism, comprising a motor (41) and a transmission shaft (42) driven to rotate by the motor (41);
**characterized in that**, the storage box (30) comprises a support member (32) for supporting the granules, the support member (32) is provided with a discharge port (321) communicating with the accommodation cavity (31), the transmission shaft (42) is connected to the support member (32) in a drivable manner, and the support member (32) is movably provided relative to the transmission shaft (42); driven by the transmission shaft (42), the support member (32) is capable of performing intermittent movement relative to the fixing base (20).

2. The granule feeding device according to claim 1, wherein within a unit time, the number of movements of the support member (32) relative to the fixing base (20) is greater than or equal to the number of rotations of the transmission shaft (42);
and/or wherein the support member (32) is capable of performing at least one of the following movements relative to the fixing base (20):
movement along a radial direction of the transmission shaft (42); movement along an axial direction of the transmission shaft (42); rotation around the transmission shaft (42).

3. The granule feeding device according to claim 2, wherein a reset element (34) is connected to the support member (32); the support member (32) performs intermittent movement along a first direction driven by the transmission shaft (42), and the reset element (34) applies a reset force to the support member (32) along a direction opposite to the first direction.

4. The granule feeding device according to any one of claims 1 to 3, wherein the storage box (30) further comprises a box wall (301), the support member (32) is disposed within a surrounding space of the box wall (301), the accommodation cavity (31) is defined by the box wall (301) and the support member (32); the support member (32) is movably provided relative to the box wall (301), and driven by the transmission shaft (42), the support member (32) moves relative to the box wall (301) along the radial direction of the transmission shaft (42).

5. The granule feeding device according to claim 4, wherein a preset gap is provided between the support member (32) and the box wall (301) along a first direction, the preset gap allows the support member (32) to move linearly relative to the box wall (301) along the first direction.

6. The granule feeding device according to claim 5, wherein the storage box (30) further comprises a bottom plate (302), the bottom plate (302) is fixedly disposed at the bottom of the box wall (301); the transmission shaft (42) passes through the bottom plate (302) and is connected with the support member (32) in a drivable manner, the support member (32) is movably supported above the bottom plate (302) along the first direction;
the transmission shaft (42) is fixedly connected with a transfer disc (423) at an end facing the fixing base (20), the motor (41) drives the transmission shaft (42) to rotate via the transfer disc (423); the transmission shaft (42) and the bottom plate (302) are configured with a clearance fit, and the transfer disc (423) is provided with at least one transfer cavity (422) for accommodating the granules, and the transfer disc (423) is configured to satisfy at least one of the following features:
the end surface of the transfer disc (423) facing the base plate (302) is provided with a powder guiding portion (427) protruding towards the bottom plate (302), and the powder guiding portion (427) is attached to and disposed around an outer periphery of the transmission shaft (42); the powder guiding portion (427) comprises one or more guiding inclined surfaces (428), and a protruding height of the guiding inclined surfaces (428) increases along a rotation direction of the transmission shaft (42);
an edge of the transfer disc (423) is provided with an annular powder blocking rib (429), the powder blocking rib (429) protrudes towards the bottom plate (302);
the fixing base (20) is further provided with a powder leakage port (204), and during rotation of the transfer disc (423) driven by the transmission shaft (42), the transfer cavity (422) is capable of communicating with the powder leakage port (204).

7. The granule feeding device according to claim 6, wherein the bottom plate (302) is integrally formed with the box wall (301), the support member (32) is slidably connected with the bottom plate (302) along the first direction, and the bottom plate (302) is capable of shielding the preset gap;
and/or wherein a reset element (34) is connected between the support member (32) and the bottom plate (302), a first end (341) of the reset element (34) abuts against the bottom plate (302), a second end (342) of the reset element (34) abuts against the support member (32), and the reset element (34) provides a reset force to the support member (32) along a direction opposite to the first direction.

8. The granule feeding device according to claim 7, wherein the support member (32) is provided with a first limiting portion (329) on the side facing the bottom plate (302), the bottom plate (302) is provided with a second limiting portion (309) cooperating with the first limiting portion (329), the second end (342) abuts against the first limiting portion (329); the first limiting portion (329) and the second limiting portion (309) are capable of abutting against each other along the first direction, such that a movement stroke of the support member (32) relative to the bottom plate (302) along the direction opposite to the first direction is limited.

9. The granule feeding device according to any one of claims 1 to 3, wherein the support member (32) is provided with a blocking portion (327), the transmission shaft (42) is provided with a driving portion (426) connected with the blocking portion (327) in a drivable manner; driven by the transmission shaft (42), the driving portion (426) abuts against and drives the blocking portion (327) to drive the support member (32) to move relative to the fixing base (20).

10. The granule feeding device according to claim 9, wherein the support member (32) is provided with a clearance hole (324) for the transmission shaft (42) to pass through, the support member (32) is provided with a rib (328) on a side facing the fixing base (20), the rib (328) at least partially surrounds the clearance hole (324) to form a mating groove (326), and the blocking portion (327) is formed within the mating groove (326);
and/or wherein the transmission shaft (42) is provided with at least one driving tooth (4261), the driving tooth (4261) forms the driving portion (426), when multiple driving teeth (4261) are provided on the transmission shaft (42), the multiple driving teeth (4261) are spaced apart along a circumferential direction of the transmission shaft (42);the driving tooth (4261) intermittently abuts against and drives the blocking portion (327), so that the transmission shaft (42) intermittently drives the support member (32) to move relative to the fixing base (20);
and/or wherein the transmission shaft (42) is provided with a cam, the cam forms the driving portion (426), along a circumferential direction of the transmission shaft (42), the cam is capable of abutting against and driving the blocking portion (327).

11. The granule feeding device according to any one of claims 1 to 3, wherein the support member (32) comprises a supporting surface (325) for supporting the granules, the supporting surface (325) is configured as a spiral surface, and the spiral surface takes a center line of the discharge port (321) as a spiral center line;
the spiral surface satisfies at least one of the following features:
along a radial direction of the spiral center line, the spiral surface is inclined downward towards the center of the discharge port (321);
along an axial direction of the spiral center line, a height difference between the highest point and the lowest point of the spiral surface is less than or equal to one pitch.

12. The granule feeding device according to any one of claims 1 to 3, wherein a stirring rod (43) is provided in the accommodation cavity (31), the stirring rod (43) is disposed above the support member (32) and is disposed close to the discharge port (321); the transmission shaft (42) passes through the support member (32) and is connected with the stirring rod (43) in a drivable manner, the transmission shaft (42) is capable of driving the stirring rod (43) to rotate synchronously;
the stirring rod (43) is configured to satisfy at least one of the following features:
the granules are spherical granules, the stirring rod (43) is coaxially disposed with the transmission shaft (42), an outer contour of a cross section of the stirring rod (43) is configured as a polygon, and a difference between radii of the circumscribed circle and the inscribed circle of the polygon is less than the radius of the granules;
the stirring rod (43) is connected with a stirring arm (44), the stirring arm (44) extends along a direction at an angle with respect to a longitudinal direction of the stirring rod (43); the stirring arm (44) comprises a fixed end (441) and a suspended end (442) disposed opposite to each other, the fixed end (441) is fixedly connected with the stirring rod (43), and the suspended end (442) is configured as a free end; the stirring arm (44) is configured to rotate with the stirring rod (43), the suspended end (442) is capable of deforming relative to the fixed end (441) when subjected to force.

13. The granule feeding device according to any one of claims 1 to 3, wherein the transmission shaft (42) is provided with a transfer disc (423) at an end facing the fixing base (20), the fixing base (20) is provided with a delivery outlet (201); the transfer disc (423) is provided with at least one transfer cavity (422) for accommodating the granules, with rotation of the transmission shaft (42), the transfer disc (423) drives the transfer cavity (422) to communicate with the discharge port (321) and the delivery outlet (201) sequentially;
preferably, wherein an outer peripheral surface of the transfer disc (423) is provided with transmission teeth (421), the motor (41) drives the transfer disc (423) to rotate via the transmission teeth (421); the transmission shaft (42) is integrally formed with the transfer disc (423);
the storage box (30) further comprises a bottom plate (302) and a box wall (301) disposed on the bottom plate (302), the support member (32) is movably disposed above the bottom plate (302); the bottom plate (302) is provided with a storage channel (322) communicating with the discharge port (321), the storage channel (322) is capable of communicating the accommodation cavity (31) with the transfer cavity (422); the storage channel (322) has a storage space, and along a direction in which the granules enter the storage channel (322), the storage space is configured to accommodate at least one granule.

14. The granule feeding device according to claim 13, further comprising a sealing cover (48) that is circumferentially fixed relative to the transfer disc (423), wherein the sealing cover (48) is disposed between the transfer disc (423) and the fixing base (20), the sealing cover (48) is provided with a through hole (482) communicating with the transfer cavity (422), the transfer cavity (422) communicates with the delivery outlet (201) through the through hole (482), and the sealing cover (48) is configured to satisfy at least one of the following features:
the fixing base (20) is provided with a positioning post (202), the transfer disc (423) is provided with a positioning hole (420) extending along a direction of the rotation axis, the positioning post (202) passes through the sealing cover (48) and extends into the positioning hole (420); an insertion foot (4201) is provided at the edge of the positioning hole (420), the sealing cover (48) is further provided with a blocking edge (485) disposed at the periphery of the positioning post (202), a slot (4801) is formed between the blocking edge (485) and the positioning post (202), the insertion foot (4201) is inserted into the slot (4801) to restrict rotation of the sealing cover (48) relative to the transfer disc (423);
the transfer disc (423) is provided with a recess (424) on a side facing the fixing base (20), the sealing cover (48) covers an opening of the recess (424), a second elastic member (483) is disposed in the recess (424), and the second elastic member (483) provides an elastic force to the sealing cover (48) along a direction of the rotation axis away from the transfer disc (423);
the transfer disc (423) is provided with a recess (424) on a side facing the fixing base (20), the sealing cover (48) covers an opening of the recess (424), the sealing cover (48) is provided with a skirt edge (484) surrounding the rotation axis at an end facing the transfer disc (423), and the skirt edge (484) extends into the recess (424);
the fixing base (20) is further provided with a powder leakage port (204) spaced apart from the delivery outlet (201), the fixing base (20) is provided with an annular rib (203) surrounding the rotation axis, both the delivery outlet (201) and the powder leakage port (204) are located on the inner side of the annular rib (203), and the sealing cover (48) abuts against the annular rib (203).

15. A beverage machine, comprising a main body (10), the main body (10) is provided with a target cleaning chamber (12), and **characterized in that**, the main body (10) is provided with the granule feeding device (100) according to any one of claims 1 to 14, and the granule feeding device (100) is configured to distribute granules to the target cleaning chamber (12).
